Europäisches Patentamt

European Patent Office

Office européen des brevets

(19)

(11) **EP 0 683 946 B1**

(12) **FASCICULE DE BREVET EUROPEEN**

(45) Date de publication et mention
de la délivrance du brevet:
**28.05.2003 Bulletin 2003/22**

(21) Numéro de dépôt: **95903380.4**

(22) Date de dépôt: **08.12.1994**

(51) Int Cl.⁷: $H04L\ 7/02$, H03D 13/00

(86) Numéro de dépôt international:
**PCT/FR94/01433**

(87) Numéro de publication internationale:
**WO 95/016317 (15.06.1995 Gazette 1995/25)**

(54) **SYSTEME DE RECEPTION OU DE LECTURE SERIE D'INFORMATIONS AVEC ECHANTILLONNAGE A INTERVALLES REGULIERS**

SYSTEM ZUM EMPFANG ODER LESEN EINES INFORMATIONSSTROMES DURCH ABTASTUNG IN REGELMÄSSIGEN ABSTÄNDEN

SYSTEM FOR SERIAL RECEPTION OR READING OF INFORMATION WITH SAMPLING AT REGULAR INTERVALS

(84) Etats contractants désignés:
**DE GB NL**

(30) Priorité: **10.12.1993 FR 9314869**

(43) Date de publication de la demande:
**29.11.1995 Bulletin 1995/48**

(73) Titulaire: **Thales**
**75008 Paris (FR)**

(72) Inventeurs:
 • **COLINEAU, Joseph**
   **F-92402 Courbevoie Cédex (FR)**
 • **AUDOIN, Michel**
   **F-92402 Courbevoie Cédex (FR)**

(56) Documents cités:
   **EP-A- 0 173 569        EP-A- 0 241 974**
   **US-A- 4 030 045        US-A- 4 627 080**
   **US-A- 4 908 842**

**Description**

L'invention concerne un système de réception ou de lecture série d'informations, et notamment un système de réception ou de lecture d'informations numériques dans lequel l'horloge locale n'est pas asservie avec l'horloge d'émission (ou d'inscription) et dans lequel il convient de déterminer la phase du signal par rapport à l'horloge locale.

La partie réception dune voie de transmission ou de stockage d'informations numériques comporte généralement une fonction de régénération de l'horloge des Informations transmises. Dans la plupart des cas, cette horloge est reconstituée à partir du train même des données transmises. La présente invention s'applique à la reconstitution de l'horloge d'un signal reçu, et échantillonné de manière asynchrone par rapport à cette horloge.

Un filtre de poursuite de phase réalisé numériquement comporte une fonction de mesure de phase (ou d'écart de phase) et une fonction de prédiction (ou d'estimation).

On connaît des documents US-A-4 030 045 et US-A-4 908 842 qui décrivent des systèmes de réception ou de lecture d'informations série numériques dans lequel l'information est échantillonnée à intervalles réguliers sous la commande d'une horloge locale et comportant une table qui pour chaque couple de valeurs d'échantillons d'informations consécutifs contient une information sur la valeur de phase mesurée.

Lorsque le signal analogique est échantillonné à partir de l'horloge reconstituée, comme c'est généralement le cas sur les voies numériques, l'écart de phase est proche de zéro dès que la boucle de phase est verrouillée. La détermination de l'erreur de phase est évidente si le signal est suréchantillonné d'un facteur deux. Des algorithmes (Mueller and Müller) ont été proposés dans le cas d'un signal binaire échantillonné à fréquence bit.

Dans le cas où la fréquence d'échantillonnage est quelconque par rapport à la fréquence bit, la phase instantanée varie rapidement et il n'est pas évident de déterminer cette phase avec une bonne précision.

Le circuit, objet de l'invention, permet de déterminer la phase de chacun des échantillons d'un signal numérique biniveau ou multiniveau transmis à travers un canal analogique.

L'invention concerne donc un système de réception ou de lecture d'informations série numériques pour la mesure de la phase du signal porteur desdites informations par rapport à une horloge locale, comportant des moyens pour échantillonner lesdites informations à intervalles réguliers sous la commande de l'horloge locale, pour fournir des informations multiniveaux, et comportant également au moins une table contenant pour chaque couple de valeurs d'échantillons d'informations consécutifs une valeur de phase préalablement calculée, et il est caractérisé en ce que la table contient également un degré de confiance accordé à chaque valeur de phase calculée, ladite table comportant des moyens pour fournir, à la lecture desdites informations série, pour chaque couple de valeurs d'échantillons d'informations consécutifs, une valeur de phase calculée et un degré de confiance, et en ce que la fréquence d'échantillonnage est supérieure ou égale à la fréquence de modulation du signal.

Les différents objets et caractéristiques de l'invention apparaîtront plus clairement dans la description qui va suivre faite à titre d'exemple et dans les figures annexées qui représentent :

- la figure 1, un exemple de signal reçu ;
- la figure 2, une représentation des lieux de couples d'échantillons ;
- les figures 3a et 3b, un exemple du principe de la mesure de phase ;
- les figures 4 et 5, d'autres lieux de couples d'échantillons ;
- la figure 6, un schéma explicatif de la détermination de la position vraisemblable d'un couple d'échantillons ;
- la figure 7, un filtre simplifié de la mesure de déphasage ;
- la figure 8, un filtre plus complet de la mesure de déphasage ;
- la figure 9, un filtre de contrôle d'amplitude ;
- les figures 10 et 11, un système général de mesure de déphasage.

Le système de l'invention sera tout d'abord décrit sur un cas simple puis généralisé.

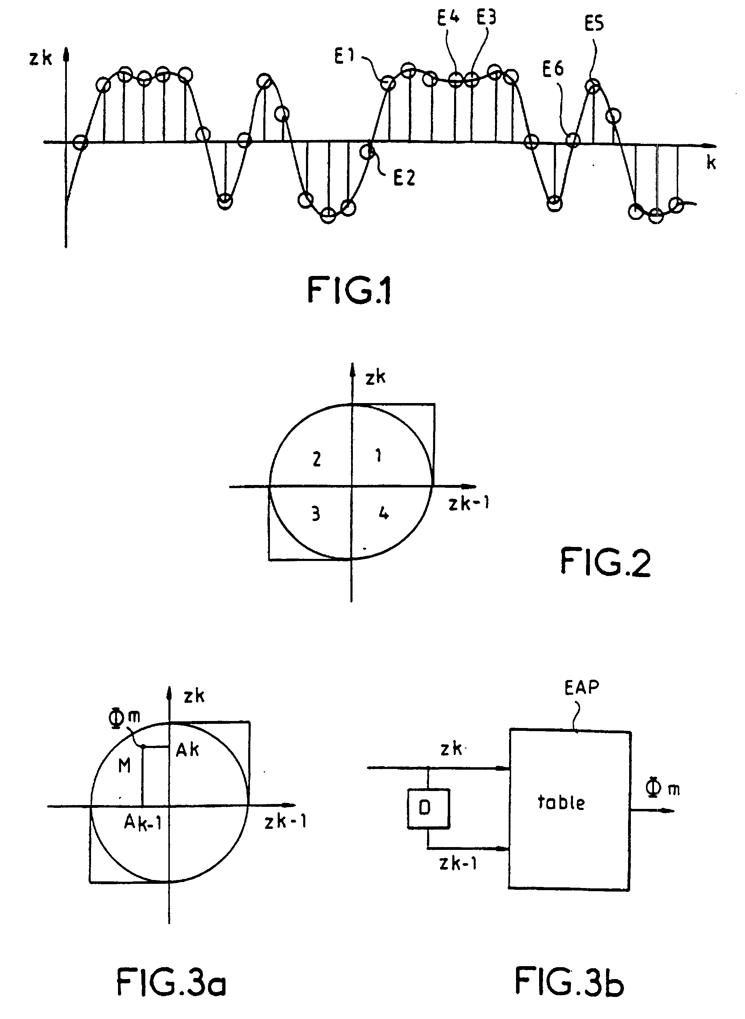

La figure 1 représente un signal binaire transmis à travers un canal de Nyquist et échantillonné à une fréquence $f_e = 2 f_b$ ($f_b$ = fréquence bit où fréquence binaire du signal reçu).

La représentation géométrique du lieu des couples d'échantillons successifs ($z_{k-1}$, $z_k$) avec une amplitude nominale et en l'absence de bruit est donnée en figure 2. Les diverses trajectoires peuvent être graduées en phase. L'on voit que lorsque le point représentatif du signal se trouve dans l'un des quadrants 2 ou 4 du plan ($z_{k-1}$, $z_k$), il est possible de déterminer sans ambiguïté la phase du signal à cet instant. Par exemple les échantillons E1 et E2 de la figure 1 donnent lieu à un point sur le quadrant 4.

En l'absence de bruit, d'autres zones des trajectoires possibles sont utilisables. En revanche, lorsque le point représentatif se trouve proche du point (1, 1) ou du point (-1, -1), il n'est pas possible de donner une valeur de la phase du signal.

Dans les quadrants 1 et 3, les parties droites correspondent à des couples d'échantillons tels que E3-E4, situés sur des méplats de la courbe. Les parties circulaires correspondent à des couples d'échantillons, tels que E5-E6 de même signe.

Les quadrants 2 et 4 sont ceux pour lesquels le signal change de signe entre 2 échantillons successifs. C'est la situation utilisée généralement pour faire une mesure de la phase dans les comparateurs de phase des boucles à verrouillage de phase (PLL) analogiques et dans la plupart des réalisations de PLL numériques. L'on voit qu'il est possible de faire une mesure de la phase dans d'autres cas. Ces autres situations ne sont généralement pas utilisées car il faut tenir compte de la moindre précision de la mesure sur certaines parties de la trajectoire, ou du risque d'erreur d'affectation du point courant à sa vraie trajectoire. Si l'on considère en effet que dans le cas réel, le signal est affecté de bruit, et d'une erreur d'amplitude, il existe une probabilité d'erreur sur la mesure qui dépend de la proximité relative du point aux trajectoires les plus proches.

La solution de l'invention consiste à précalculer pour chaque point du plan $(z_{k-1}, z_k)$, la valeur la plus probable de la phase du signal qui est celle du point le plus proche sur l'une des trajectoires nominales du signal, ainsi qu'un degré de confiance accordé à cette valeur en fonction de la distance à cette trajectoire et aux autres trajectoires les plus proches. Ce calcul assez lourd, n'est fait qu'une fois, et les résultats sont stockés dans une table mémoire. A l'adresse donnée par un couple de points $(z_{k-1}, z_k)$, on trouve les résultats de ces calculs, et le circuit peut les exploiter en temps réel.

Ainsi le circuit de la figure 3b reçoit deux échantillons $z_k$ et $z_{k-1}$. Un circuit à retard D permet de fournir ces deux échantillons en même temps à la table EAP. Le couple des amplitudes $A_{k-1}$ et $A_k$ correspondant à ces échantillons (figure 3a) permet d'accéder alors à une valeur de phase dans la table EAP.

Dans le cas où le signal est biniveau (comme en figure 1) et égalisé selon un canal de Nyquist d'ordre zéro (égalisation en $\cos^2$), la forme des lieux de couples d'échantillons est très simple, et l'on peut facilement déduire une loi de calcul pour la phase du signal, soit :

$$\Theta_m(k) = 2 \text{ Arc Tg} \left| \frac{\sin \Pi \, Fb/Fe}{\cos \Pi \, Fb/Fe - \dfrac{Zk-1}{Zk}} \right|$$

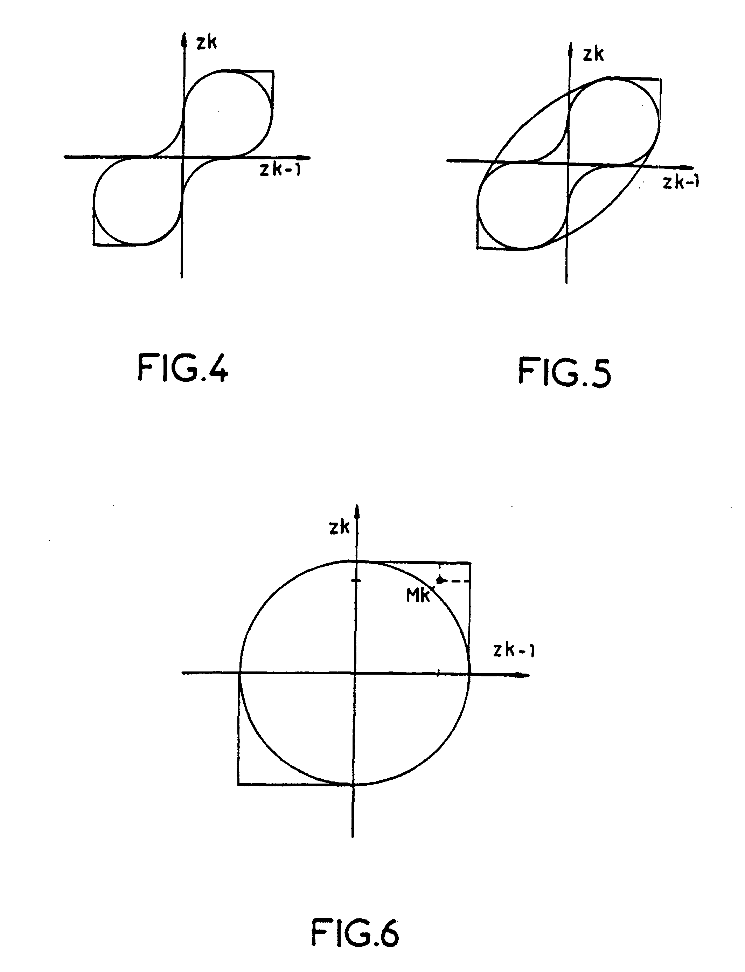

Les figures 4 et 5 donnent les trajectoires des signaux pour d'autres voies classiques. Les expressions analytiques sont plus difficiles à déterminer, mais il est toujours possible de les calculer en considérant, l'une après l'autre, les configurations de signaux binaires émis correspondants, et en calculant à partir de la réponse impulsionnelle du canal, les signaux reçus.

La figure 6 montre la position d'un point mesuré à un instant donné. Ce point ne se trouve pas exactement sur une trajectoire du signal par suite de la présence de bruit dans le canal. Si la phase n'est pas stabilisée, on ne peut se baser que sur la proximité du point M à chaque trajectoire. On retiendra pour déterminer la phase la trajectoire la plus vraisemblable.

La vraisemblance de l'hypothèse Tj est la probabilité conditionnelle d'avoir une mesure en M si la trajectoire est Tj. Elle s'exprime par:

$$pr(M|\, Tj) = \left( \frac{1}{2\pi N_0 b} \right) \exp\left( -\frac{MN^2}{2N_0 b} \right)$$

où $N_0 b$ est la variance de chaque mesure $z_k$.

La probabilité d'observation de M est alors le produit de la probabilité d'avoir la trajectoire Tj par celle d'observer M si la trajectoire est Tj:

$$pr(M) = pr\,(M|Tj). \; pr\,(Tj)$$

Il est donc possible pour un point donné de retenir l'hypothèse la plus probable, et aussi en comparant la probabilité de cette hypothèse et celle des autres hypothèses possibles, d'accorder un crédit plus ou moins grand à cette mesure. A cette étape, on peut prendre en compte également les fluctuations non gaussiennes du canal (variations d'amplitude du signal ...).

On calcule ainsi pour chaque point du plan, la valeur probable de la phase du signal et un coefficient de confiance $C_k$.

Lorsque le filtre de phase est stabilisé, il est possible, en outre, de tenir compte de la valeur prédite de la phase, et de l'incertitude sur cette prédiction. Si l'on fait l'approximation d'une erreur de phase gaussienne, on peut généraliser les calculs précédents, en définissant par exemple une probabilité conditionnelle d'observer M si la trajectoire est Tj et si la phase est la valeur prédite $\Phi_k$.

Il est possible aussi d'utiliser la valeur prédite de la phase pour éliminer certaines trajectoires improbables, voire pour déterminer la trajectoire la plus probable.

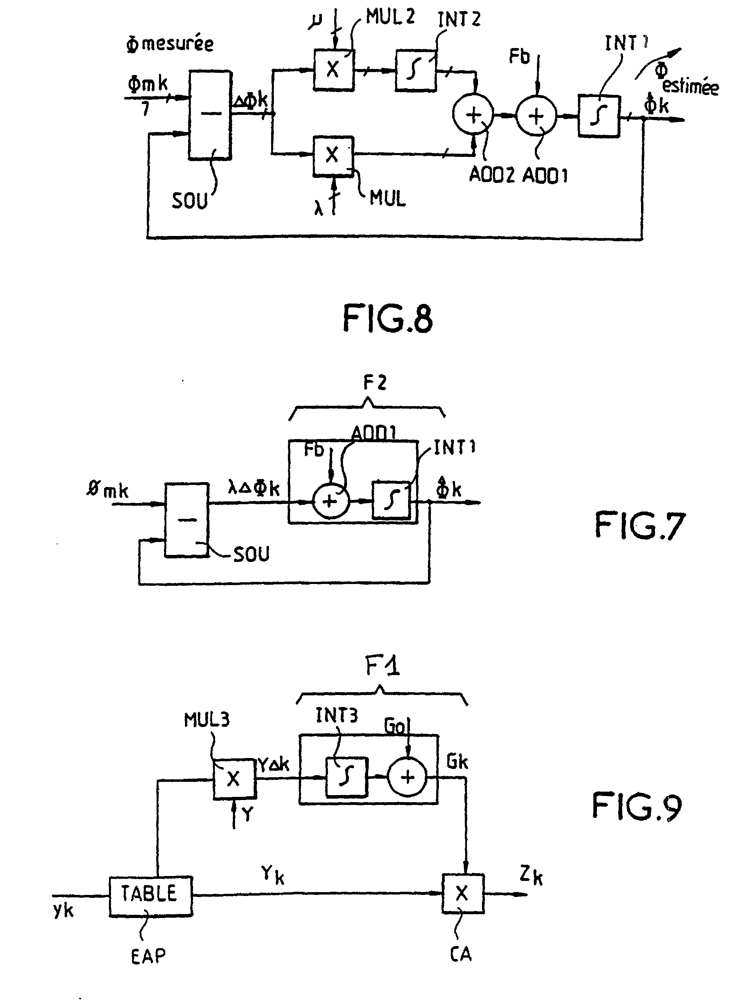

La figure 7 représente une structure de filtre de phase. La prédiction de phase proprement dit s'effectue par intégration d'une constante représentant la fréquence $F_b$ du signal. Une erreur de phase est obtenue par différence de la phase prédite et de la phase mesurée à l'aide d'un soustracteur SOU. L'erreur de phase est pondérée par un coefficient $\lambda$. Cette erreur pondérée est additionnée (additionneur ADD) à $\frac{2\Pi Fb}{Fe}$ puis intégrée (intégrateur INT1).

La figure 8 représente un exemple de réalisation plus complet de ce filtre. Le soustracteur SOU, le circuit de multiplication MUL1 qui pondère à l'aide d'un coefficient $\lambda$, l'additionneur ADD1 et l'intégrateur INT1 réalisent les fonctions du filtre de la figure 7. En supplément la sortie du soustracteur SOU est connectée à un multiplicateur MUL2 (coefficient de multiplication $\mu$) et à un intégrateur INT2 de façon à estimer un écart moyen de fréquence par intégration de l'erreur instantanée de phase qui sera injecté après pondération par le coefficient $\mu$.

Le calcul de la vraisemblance d'une mesure suppose connue et stable l'amplitude du signal. Dans le cas général, de petites fluctuations, ou un écart de niveau peuvent se produire. Il est facile de les corriger si ces phénomènes sont à fréquence faible devant celle du signal. La connaissance de zk, zk-1 et éventuellement de $\varphi k$ permet de déterminer l'amplitude du signal, ou l'écart d'amplitude par rapport à la valeur nominale. Cet écart peut être pondéré comme on l'a fait pour l'écart de phase.

Cette mesure permet après filtrage et addition à une valeur de consigne, de corriger l'amplitude du signal (figure 9).

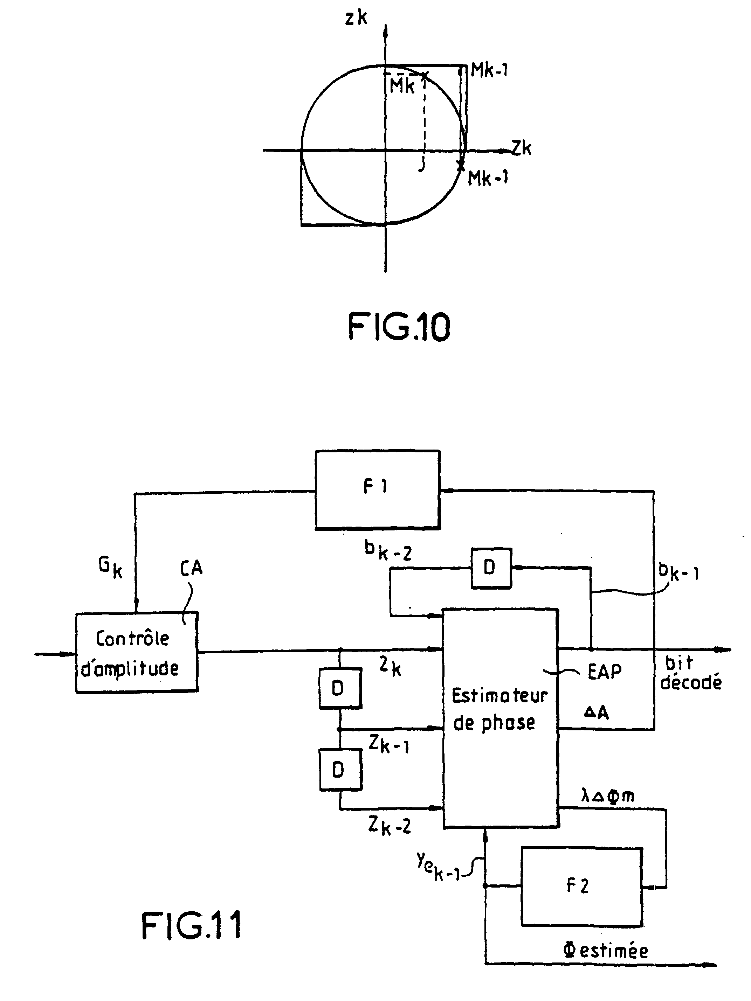

La prise en compte du ou des derniers échantillons transmis dans le canal, et déjà décodé(s) permet de ne conserver que les trajectoires compatibles avec la valeur d'un échantillon en cours de réception diminuant ainsi les risques de confusion ou d'indétermination. A défaut, on peut utiliser une estimation de cette information à partir de l'échantillon précédent. Par exemple la figure 10 représente la position d'un point courant Mk : il y a une ambiguïté possible entre deux trajectoires (la trajectoire circulaire sur la trajectoire rectiligne). Si l'on représente les positions possibles du point $M_{k-1}$ à l'instant précédent, on voit qu'il est facile de lever l'ambiguïté, même si l'on utilise un très petit nombre de bits pour décrire zk-2. On ne peut généralement pas passer de manière indifférente d'une trajectoire à une autre (circulaire à rectiligne par exemple) ou parcourir dans un sens quelconque une trajectoire. Plutôt que zk-2, il peut être intéressant d'utiliser la connaissance de la trajectoire à l'instant précédent, et pour cela de délivrer à chaque instant une information donnant la trajectoire actuelle.

Dans certains cas, c'est la connaissance même approximative de l'échantillon suivant, qui permet de lever l'ambiguïté sur la trajectoire.

Il est avantageux d'utiliser la même table de mesure de la phase pour y inclure le calcul de l'écart de phase pondéré. Au lieu de délivrer une phase $\Phi_{mk}$ et un coefficient de confiance $C_k$, la table peut délivrer directement une différence de phase $\lambda\Delta\Phi_k$ pondérée par le coefficient de confiance $C_K$ ce qui diminue le nombre d'opérateurs numériques et de sorties. Le filtre de la figure 7 peut être alors utilisé efficacement. Le filtre de la figure 7 est de plus simplifié : il s'agit d'un filtre du premier ordre.

Une boucle à verrouillage de phase (PLL) comportant l'ensemble des dispositions décrites ci-dessus est représenté en figure 11. Cette structure est performante et bien adaptée au traitement d'un signal complexe comme par exemple le signal d'un canal à réponse partielle PR2, dont le diagramme de phase est représenté en figure 4. On pourra généralement ne conserver qu'une partie des dispositions prévues sans dégradation excessive des performances.

Le système de la figure 11 comporte un circuit de contrôle d'amplitude CA recevant les différents échantillons successifs yk. Ce circuit de contrôle d'amplitude (amplificateur par exemple) pondère l'amplitude de chaque échantillon à l'aide d'un coefficient $G_k$.

Chaque échantillon corrigé en amplitude $Z_k$ est transmis à une table EAP ainsi qu'à des circuits à retard D. Ceux-ci transmettent à la table les échantillons $Z_{k-1}$ et $Z_{k-2}$ précédents. Dans la case de la table EAP correspondant aux échantillons le système trouve une erreur de phase $\lambda\Delta\Phi_m$ affectée d'un coefficient de confiance. Ce signal est transmis à un filtre F2 du type de celui de la figure 7. Le filtre F2 fourni la phase estimée de l'horloge locale.

Par ailleurs, chaque couple d'échantillon ($Z_k$, $Z_{k-1}$) permet au système d'obtenir dans la table un écart d'amplitude $\Delta A$. Celui-ci est transmis à un filtre F1 de contrôle d'amplitude du type de celui de la figure 9. Ce filtre F1 commande le circuit de contrôle d'amplitude CA.

On a vu précédemment que la connaissance à priori -même imprécise- de la phase par connaissance des décodages précédentes permet de lever des ambiguïtés entre plusieurs trajectoires possibles. On peut donc dans ce cas utiliser l'information estimée qui est fournie à l'entrée de la table pour mieux séparer les hypothèses possibles.

Un autre moyen de lever l'ambiguïté est d'utiliser le signal décodé $b_{k-2}$ ou l'échantillon $Z_{k-2}$.

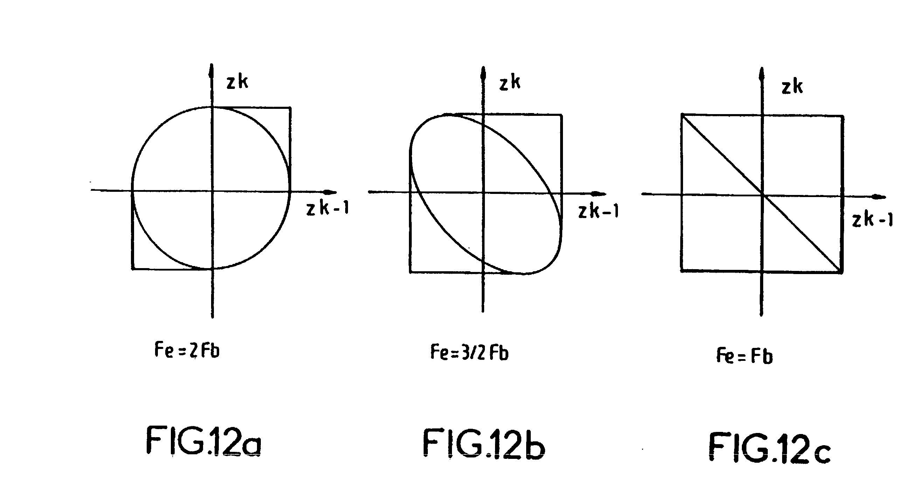

La figure 12a représente un diagramme des lieux des couples d'échantillons pour une fréquence d'échantillonnage égale à deux fois la fréquence bit. La figure 12c représente un diagramme pour une fréquence d'échantillonnage égale à la fréquence bit.

Dans le cas où la fréquence d'échantillonnage n'est pas un multiple entier de la fréquence bit, les diagrammes précédents sont modifiés mais il est toujours possible d'appliquer cette méthode. Elle se révèle plus précise que la méthode classique d'interpolation linéaire appliquée aux transitions du signal. Par exemple la figure 12b montre le diagramme correspondant à une fréquence d'échantillonnage Fe = 3/2 Fb.

Certains algorithmes de décodage n'exigent pas une égalisation préalable du signal. Définir et appliquer dans ces conditions une loi analytique de calcul de la phase n'est généralement pas simple. En revanche, il est toujours possible de définir, au besoin expérimentalement le diagramme.

La réalisation en mémoire ROM de la mesure de la phase permet sans nécessiter de composant supplémentaire, d'associer d'autres fonctions utiles dans une chaîne de décodage : détection des baisses importantes de niveau ("erasures"), détection et gestion de la désynchronisation du filtre à verrouillage de phase. La limite du nombre de fonctions supplémentaires "gratuites" étant fixée par le nombre de sorties disponibles sur la mémoire ROM.

En particulier, la fonction de décodage du signal est facilement intégrable dans la table. En effet à l'aide des formules d'interpolation de Lagrange, et par la connaissance de 3 (au moins) d'échantillons successifs $Z_{k-2}$, $Z_{k-1}$, $Z_k$ et de la phase $\varphi_{k-1}$, il est possible de reconstruire un échantillon i k-1 tel que:

$$i(k-1) = \sum_{i=0}^{2} C_i\, z(k-i) \text{ avec } C_i = \prod_{j=0;\, j\neq i}^{2} \frac{(\Pi - \varphi_{k-1}) - t_j}{t_i - t_j} \text{ et } t_k - t_{k-1} = T_e$$

Pour décoder le signal, il suffit de conserver le signe de ik (décodage à seuil) :

$$b(k-1) = \text{sgn}\,(i\,k-1)$$

La figure 11 présente une réalisation de cette fonction.

Comme on l'a vu dans la description qui précède, le système de l'invention permet de décrire la loi de mesure de la phase par une table dont les entrées sont les valeurs de plusieurs (généralement 2) échantillons successifs de signal et la valeur prédite de la phase actuelle. Dans certains cas, on pourra aussi prendre en compte la valeur du ou des derniers bits décodés, ou le signe de l'échantillon précédent. La table contient dans chacune de ses cases, correspondant à une des combinaisons possibles des grandeurs d'entrée, une mesure de la phase ainsi qu'un degré de confiance accordé à cette mesure. Dans une variante préférentielle, ces deux informations sont remplacées par une valeur de l'erreur de phase pondérée par le degré de confiance. Egalement, le tableau délivre aussi une valeur de l'amplitude du signal ainsi qu'un degré de confiance sur cette mesure ou une valeur pondérée de l'écart d'amplitude par rapport à un niveau de référence.

Les informations ainsi délivrées sont utilisées pour faire fonctionner un filtre de prédiction de phase qui donne une estimation de la phase de chaque échantillon du signal. Une boucle de contrôle d'amplitude complète le dispositif dans le cas d'une transmission d'un signal numérique multiniveau.

La structure du système de l'invention est applicable à la récupération de l'horloge de signaux bi ou multiniveaux dans le cas général d'une voie de traitement asynchrone. La mesure de la phase s'effectue par maximum de vraisemblance, permettant des performances optimales, y compris dans les cas "difficiles" de faible rapport signal à bruit, ou de fréquence d'échantillonnage non multiple entière de la fréquence bit La réalisation qui serait complexe si l'on utilisait des opérateurs numériques câblés ou programmés, est ici très simplifiée par l'utilisation de techniques de tables. Un autre mode de réalisation pourrait utiliser des techniques de réseaux de neurones pour remplacer la table en mémoire ROM.

**Revendications**

1. Système de réception ou de lecture d'informations série numériques pour la mesure de la phase du signal porteur desdites informations par rapport à une horloge locale, comportant des moyens pour échantillonner lesdites informations à intervalles réguliers sous la commande de l'horloge locale, pour fournir des informations multiniveaux, et comportant également au moins une table (EAP) contenant pour chaque couple de valeurs d'échantillons d'informations consécutifs une valeur de phase préalablement calculée, **caractérisé en ce que** la table (EAP) contient également un degré de confiance accordé à chaque valeur de phase calculée ladite table (EAP) comportant des moyens pour fournir, à la lecture desdites informations série, pour chaque couple de valeurs d'échantillons d'informations consécutifs, une valeur de phase calculée et un degré de confiance, et **en ce que** la fréquence d'échantillonnage (fe) est supérieure ou égale à la fréquence de modulation du signal (fb).

**2.** Système selon la revendication 1, **caractérisé en ce que** la table (EAP) contient pour chaque couple de valeurs d'échantillons d'informations consécutifs, une phase estimée précédemment et une différence de phase, et qu'il comporte :

- un circuit d'addition (ADD1) pour additionner la différence de phase et le rapport de la fréquence du signal (fb) à la fréquence d'échantillonnage (fe) ;
- un circuit d'intégration (INT1) pour intégrer les résultats du circuit d'addition et pour founir une valeur de phase estimée.

**3.** Système selon la revendication 1, **caractérisé en ce que** la table (EAP) contient une différence de phase pondérée et une valeur de signal décodé pour chaque ensemble de valeurs suivant :

- trois valeurs d'échantillons d'informations consécutifs ;
- une phase estimée précédemment ;

   et qu'il comporte:

- un premier circuit d'addition (ADD1) pour additionner le signal de différence de phase et le rapport de la fréquence du signal (fb) à la fréquence d'échantillonnage (fe) ;
- un circuit d'intégration (INT1) pour intégrer les résultats du circuit d'addition et pour fournir une valeur de phase estimée.

**4.** Système selon la revendication 1, **caractérisé en ce que** la table (EAP) comporte pour chaque couple de valeurs d'échantillons d'informations consécutifs une valeur d'écart d'amplitude par rapport à une valeur nominale.

**5.** Système selon la revendication 4, **caractérisé en ce qu'**il comporte un circuit de contrôle d'amplitude (CA) pour recevoir les échantillons d'information, ladite table (EAP) comportant des moyens pour fournir une valeur d'écart d'amplitude au circuit de contrôle d'amplitude (CA) pour corriger l'amplitude des échantillons reçus.

**6.** Système selon la revendication 5, **caractérisé en ce qu'**il comporte un circuit de filtrage (F1) d'amplitude pour recevoir les valeurs d'écarts d'amplitudes et les transmettre au circuit de contrôle d'amplitude (CA).

**7.** Système selon la revendication 6, **caractérisé en ce que** le circuit de filtrage (F1) d'amplitude comporte un circuit de pondération (MUL3) pour recevoir de la table (EAP) les valeurs d'écarts d'amplitude et pour fournir des valeurs pondérées à un circuit d'intégration (INT3) qui est prévu pour fournir une valeur de correction au circuit de contrôle d'amplitude (CA).

**8.** Système selon la revendication 1, **caractérisé en ce qu'**il comporte :

- un circuit de soustraction (SOU) pour recevoir à chaque échantillonnage une valeur de phase calculée provenant de la table (EAP) et une valeur de phase estimée antérieurement et pour foumir un signal de différence de phase ($\lambda \Delta \phi_k$) proportionnel à la différence des valeurs de phases calculée et estimée ;
- un circuit d'addition (ADD1) pour additionner le signal de différence de phase et le rapport de la fréquence du signal (fb) à la fréquence d'échantillonnage (fe) ;
- un circuit d'intégration (INT1) pour intégrer les résultats du circuit d'addition et pour fournir une valeur de phase estimée.

**9.** Système selon la revendication 8, **caractérisé en ce que** le circuit de soustraction (SOU) est prévu pour foumir un signal de différence de phase égal à la différence des valeurs de phases calculée et estimée et **en ce que** le système comprend entre le circuit de soustraction (SOU) et le premier circuit d'addition (ADD1), un deuxième circuit d'addition (ADD2) possédant deux entrées auxquelles sont connectées d'une part un premier circuit de multiplication (MUL) pour multiplier le signal de différence de phase par un premier coefficient ($\lambda$) et d'autre part un deuxième circuit de multiplication (MUL2) pour multiplier le signal de différence de phase par un deuxième coefficient ($\mu$) suivi par un intégrateur (INT2).

**EP 0 683 946 B1**

**Patentansprüche**

1. System zum Empfangen oder Lesen von digitalen seriellen Informationen, um die Phase des Trägersignals dieser Informationen in bezug auf einen lokalen Takt zu messen, mit Mitteln zum Abtasten der Informationen in regelmäßigen Intervallen unter der Steuerung des lokalen Takts, um Mehrfachpegel-Informationen zu liefern, und außerdem mit wenigstens einer Tabelle (EAP), die für jedes Paar von aufeinanderfolgenden Informationsabtastwerten einen im voraus berechneten Phasenwert enthält, **dadurch gekennzeichnet, daß** die Tabelle (EAP) außerdem einen auf jeden berechneten Phasenwert abgestimmten Zuverlässigkeitsgrad enthält, wobei die Tabelle (EAP) Mittel umfaßt, die beim Lesen der seriellen Informationen für jedes Paar aufeinanderfolgender Informationsabtastwerte einen berechneten Phasenwert und einen Zuverlässigkeitsgrad liefern, und daß die Abtastfrequenz (fe) größer oder gleich der Modulationsfrequenz (fb) des Signals ist.

2. System nach Anspruch 1, **dadurch gekennzeichnet, daß** die Tabelle (EAP) für jedes Paar aufeinanderfolgender Informationsabtastwerte eine vorher geschätzte Phase und eine Phasendifferenz enthält und daß es umfaßt:

   - eine Additionsschaltung (ADD1), die die Phasendifferenz und das Verhältnis der Frequenz (fb) des Signals zu der Abtastfrequenz (fe) addiert; und

   - eine Integrationsschaltung (INT1), die die Ergebnisse der Additionsschaltung integriert, um einen geschätzten Phasenwert zu liefern.

3. System nach Anspruch 1, **dadurch gekennzeichnet, daß** die Tabelle (EAP) eine gewichtete Phasendifferenz und einen Wert des decodierten Signals für jede folgende Gesamtheit von Werten enthält:

   - drei aufeinanderfolgende Informationsabtastwerte;

   - eine im voraus geschätzte Phase; und daß es umfaßt:

   - eine erste Additionsschaltung (ADD1), die das Phasendifferenzsignal und das Verhältnis der Frequenz (fb) des Signals zu der Abtastfrequenz (fe) addiert;

   - eine Integrationsschaltung (INT1), die die Ergebnisse der Additionsschaltung integriert und einen geschätzten Phasenwert liefert.

4. System nach Anspruch 1, **dadurch gekennzeichnet, daß** die Tabelle (EAP) für jedes Paar aufeinanderfolgender Informationsabtastwerte einen Wert der Amplitudenabweichung von einem Nennwert enthält.

5. System nach Anspruch 4, **dadurch gekennzeichnet, daß** es eine Amplitudensteuerschaltung (CA) umfaßt, die die Informationsabtastwerte empfängt, wobei die Tabelle (EAP) Mittel umfaßt, die an die Amplitudensteuerschaltung (CA) einen Amplitudenabweichungswert liefern, um die Amplitude der empfangenen Abtastwerte zu korrigieren.

6. System nach Anspruch 5, **dadurch gekennzeichnet, daß** es eine Amplitudenfilterungsschaltung (F1) umfaßt, die die Amplitudenabweichungswerte empfängt und sie an die Amplitudensteuerschaltung (CA) sendet.

7. System nach Anspruch 6, **dadurch gekennzeichnet, daß** die Amplitudenfilterungsschaltung (F1) eine Gewichtungsschaltung (MUL3) umfaßt, die von der Tabelle (EAP) die Amplitudenabweichungswerte empfängt und die gewichteten Werte an eine Integrationsschaltung (INT3) liefert, die dazu vorgesehen ist, an die Amplitudensteuerschaltung (CA) einen Korrekturwert zu liefern.

8. System nach Anspruch 1, **dadurch gekennzeichnet, daß** es umfaßt:

   - eine Subtraktionsschaltung (SOU), die bei jeder Abtastung einen berechneten Phasenwert, der von der Tabelle (EAP) stammt, und einen vorher geschätzten Phasenwert empfängt und ein Phasendifferenzsignal ($\lambda\Delta\phi_k$), das zur Differenz zwischen dem berechneten und dem geschätzten Phasenwert proportional ist, liefert;

   - eine Additionsschaltung (ADD1), die das Phasendifferenzsignal und das Verhältnis der Frequenz (fb) des Signals zu der Abtastfrequenz (fe) addiert;

- eine Integrationsschaltung (INT1), die die Ergebnisse der Additionsschaltung integriert und einen geschätzten Phasenwert liefert.

9. System nach Anspruch 8, **dadurch gekennzeichnet, daß** die Subtraktionsschaltung (SOU) dazu vorgesehen ist, ein Phasendifferenzsignal zu liefern, das gleich der Differenz zwischen dem berechneten und dem geschätzten Phasenwert ist, und daß das System zwischen der Subtraktionsschaltung (SOU) und der ersten Additionsschaltung (ADD1) eine zweite Additionsschaltung (ADD2) aufweist, die zwei Eingänge besitzt, an die einerseits eine erste Multiplikationsschaltung (MUL), die das Phasendifferenzsignal mit einem ersten Koeffizienten ($\lambda$) multipliziert, und andererseits eine zweite Multiplikationsschaltung (MUL2), die das Phasendifferenzsignal mit einem zweiten Koeffizienten ($\mu$) multipliziert, angeschlossen sind, gefolgt von einem Integrator (INT2).

## Claims

1. System for receiving or reading serial digital information for the measurement of the phase of the signal carrying the said information with respect to a local clock, comprising means for sampling the said information at regular intervals under the control of the local clock, in order to provide multilevel information, and also comprising at least one table (EAP) containing, for each pair of consecutive values of information samples, a previously calculated phase value, **characterized in that** the table (EAP) also contains a confidence level assigned to each calculated phase value, the said table (EAP) comprising means for supplying, on reading the said serial information, for each pair of consecutive values of information samples, a calculated phase value and a confidence level, and **in that** the sampling frequency (fe) is greater than or equal to the signal modulation frequency (fb).

2. System according to Claim 1, **characterized in that** the table (EAP) contains, for each pair of consecutive values of information samples, a preestimated phase and a phase difference, and **in that** it comprises:

   - an addition circuit (ADD1) for adding the phase difference and the ratio of the signal frequency (fb) to the sampling frequency (fe);
   - an integration circuit (INT1) for integrating the results of the addition circuit and for supplying an estimated phase value.

3. System according to Claim 1, **characterized in that** the table (EAP) contains a weighted phase difference and a decoded signal value for each following set of values:

   - three consecutive values of information samples;
   - a preestimated phase;

   and **in that** it comprises:

   - a first addition circuit (ADD1) for adding the phase difference signal and the ratio of the signal frequency (fb) to the sampling frequency (fe);
   - an integration circuit (INT1) for integrating the results from the addition circuit and for supplying an estimated phase value.

4. System according to Claim 1, **characterized in that** the table (EAP) comprises, for each pair of consecutive values of information samples, a value of amplitude difference with respect to a nominal value.

5. System according to Claim 4, **characterized in that** it comprises an amplitude control circuit (CA) for receiving the information samples, the said table (EAP) comprising means for supplying an amplitude difference value to the amplitude control circuit (CA) in order to correct the amplitude of the samples received.

6. System according to Claim 5, **characterized in that** it comprises an amplitude filtering circuit (F1) for receiving the amplitude difference values and for transmitting them to the amplitude control circuit (CA).

7. System according to Claim 6, **characterized in that** the amplitude filtering circuit (F1) comprises a weighting circuit (MUL3) for receiving the amplitude difference values from the table (EAP) and for supplying the weighted values to an integration circuit (INT3) which is provided in order to supply a value for correcting the amplitude control circuit (CA).

8. System according to Claim 1, **characterized in that** it comprises:

- a subtraction circuit (SOU) for receiving, on each sampling, a calculated phase value coming from the table (EAP) and a previously estimated phase value and for supplying a phase difference signal ($\lambda\Delta\phi_k$) proportional to the difference between the calculated and estimated phase values;
- an addition circuit (ADD1) for adding the phase difference signal and the ratio of the signal frequency (fb) to the sampling frequency (fe) ;
- an integration circuit (INT1) for integrating the results of the addition circuit and for supplying an estimated phase value.

9. System according to Claim 8, **characterized in that** the subtraction circuit (SOU) is provided in order to supply a phase difference signal equal to the difference in the calculated and estimated phase values and **in that** the system comprises, between the subtraction circuit (SOU) and the first addition circuit (ADD1), a second addition circuit (ADD2) having two inputs to which are connected, on the one hand, a first multiplication circuit (MUL) for multiplying the phase difference signal by a first coefficient ($\lambda$) and, on the other hand, a second multiplication circuit (MUL2) for multiplying the phase difference signal by a second coefficient ($\mu$) followed by an integrator (INT2).

FIG.1

FIG.2

FIG.3a

FIG.3b

FIG.4

FIG.5

FIG.6

FIG.8

FIG.7

FIG.9

FIG.10

FIG.11

FIG.12a — Fe=2Fb

FIG.12b — Fe=3/2 Fb

FIG.12c — Fe=Fb